# EUROPÄISCHE PATENTSCHRIFT

(11) **EP 2 552 994 B1**
(45) Veröffentlichungstag und Bekanntmachung des Hinweises auf die Patenterteilung: **18.02.2015**
(21) Anmeldenummer: 11710136.0
(22) Anmeldetag: 23.03.2011
(51) Int. Cl.: C11D 3/37, C08G 63/672, C08G 63/688, C08G 63/78, C08K 3/00, C08K 5/00

(54) **FARBIGE POLYESTER**
COLORED POLYESTER
POLYESTERS COLORÉS

(30) Priorität: 27.03.2010 DE 102010013135
(43) Veröffentlichungstag der Anmeldung: 06.02.2013
(73) Patentinhaber: Clariant Finance (BVI) Limited, Road Town, Tortola (VG)
(72) Erfinder: MORSCHHAEUSER, Roman, 55122 Mainz (DE); DUECKER, Barbara, 55122 Mainz (DE); SCHOLZ, Hans Juergen, 63755 Alzenau (DE); BECHTOLD, Uwe, 60437 Frankfurt am Main (DE)
(74) Vertreter: Paczkowski, Marcus
(86) Internationale Anmeldenummer: PCT/EP2011/001456
(87) Internationale Veröffentlichungsnummer: WO 2011/120653

(56) Entgegenhaltungen:
- WO-A1-02/068497
- WO-A1-2007/079850
- DE-A1-102007 051 279
- US-A- 3 310 532
- US-A- 5 872 204
- US-A1- 2004 254 330

## Beschreibung

Die Erfindung betrifft die Verwendung von farbigen, Polyestern, die gut wasserlöslich sind, ein ausgezeichnetes Dispergiervermögen, eine gute Soil Release Wirkung und starke vergrauungsinhibierende Wirkung zeigen, aber gleichzeitig keine Tendenz zum Anfärben von Oberflächen, wie Textilien, Kunststoff, Keramik, Holz oder auch Haut zeigen in Wasch- und Reinigungsmitteln. Zusammensetzungen, enthaltend diese farbigen Polyester können rückstandsfrei mit Wasser abgewaschen werden.

Polyester aus aromatischen Dicarbonsäuren, wie Terephthalsäure oder Isophthalsäure, und sulfonierten aromatischen Dicarbonsäuren, wie Sulfoisophthalsäure, und Diolen, wie Alkylenglykol, sind als "Soil Release Polymere (SRP)" in Wasch- und Reinigungsmitteln beschrieben.

Diese Polyester haben meist ein gelblich bis gräulich-beiges Aussehen und erfüllen die ästhetischen Ansprüche der Anwender oftmals nicht.

In DE-A-10 2007 051279 werden abwaschbare Farbstoffmischungen mit nichtionischen Polyestern beansprucht und deren exzellente Farbgebung, insbesondere in polaren Zubereitungen, wie Wasch- und Spülmitteln bei gleichzeitig geringem Anfärbeverhalten der Textilien und Oberflächen ausgelobt.

Aufgabe der vorliegenden Erfindung war, die Verwendung, in Wasch- und Reinigungsmitteln, von farbigen Polyestern mit guter Soil Release Wirkung in fester Form in vielfältigen Farben bereitzustellen, die keine Verfärbung von Zusammensetzungen, insbesondere von flüssigen Zusammensetzungen verursachen und keine Tendenz zeigen, auf Textilien, harten Oberflächen wie Kunststoff, Keramik, Holz oder auch auf Haut aufzuziehen und zu haften. Zusätzlich sollen die festen Polyester auch bei geringen Temperaturen gut in Wasser löslich sein und keine signifikante Verfärbung der wässrigen Lösung verursachen.

Ein Vermischen herkömmlich hergestellter Soil Release Polyester mit Pigmenten oder Farbstoffen ist technisch aufwändig und führt zu sehr inhomogen verfärbten Polyester-Partikeln mit dunkel erscheinenden Farbstoff- oder Pigmentverklumpungen. Diese verursachen uneinheitliche Verfärbungen auf Oberflächen. Transparente Polyester-Partikel, enthaltend Pigmente in sehr geringen Konzentrationen und homogener Verteilung der Pigmente können auf diese Weise nicht hergestellt werden.

Es wurde überraschend gefunden, dass sehr homogen gefärbte und gleichzeitig transparente Polyester erhalten werden, indem man die Kondensation der Monomere in Gegenwart von Pigmenten durchführt.

Die Pigmentpartikel liegen in dem polymeren Kondensationsprodukt in feinster Verteilung vor. Die so erhaltenen erkalteten Polymerschmelzen und auch deren vermahlene Produkte zeigen ein brillantes farbiges und transparentes Aussehen ohne sichtbare, inhomogen verteilte Pigmentansammlungen und Verklumpungen. Die erfindungsgemäß erhaltenen farbigen Polyester zeigen keinerlei Tendenz, in der Waschflotte auf Textilien zu haften und können rückstandsfrei von Textilfasern abgespült werden.

Gegenstand der Erfindung ist die Verwendung, in Wasch- und Reinigungsmittels von farbigen Polyestern in fester Form, dadurch gekennzeichnet, dass die farbigen Polyester erhalten werden durch Polymerisation von Komponenten umfassend
a) eine oder mehrere sulfogruppenfreie, aromatische Dicarbonsäuren und/ oder deren Salze und/ oder deren Anhydride und/oder deren Ester,
b) optional eine oder mehrere sulfogruppenhaltige Dicarbonsäuren, deren Salze und/oder deren Anhydride und/oder deren Ester,
c) ein oder mehrere Diole,
d) optional eine oder mehrere Verbindungen der Formel (1)

   R¹O(CHR²CHR³O)ₙH (1)

   wobei
   - R¹: für eine lineare oder verzweigte, gesättigte oder ungesättigte Alkylgruppe mit 1 bis 22 C-Atomen steht, vorzugsweise Methyl,
   - R² und R³: unabhängig voneinander für Wasserstoff oder für eine Alkylgruppe mit 1 bis 4 Kohlenstoffatomen, vorzugsweise für Wasserstoff und/oder Methyl stehen und
   - n: eine Zahl von 1 bis 50, bevorzugt 2 bis 10 ist,
e) optional eine oder mehrere Verbindungen der Formel (2)

   H-(OCHR²CHR³)ₘ-SO₃X (2),

   wobei
   - R² und R³: unabhängig voneinander für Wasserstoff oder für eine Alkylgruppe mit 1 bis 4 Kohlenstoffatomen, vorzugsweise für Wasserstoff und/oder Methyl stehen und
   - m: für eine Zahl 1 bis 10, bevorzugt 1 bis 5, und
   - X: für Wasserstoff oder ein Alkalimetallion steht, und
f) optional ein oder mehrere vernetzend wirkende polyfunktionelle Verbindungen,
   mit 3 bis 6 zur Polykondensation befähigter Funktionen, insbesondere Säure-, Alkohol- oder Esterfunktionen
   mit der Maßgabe, dass mindestens eine der Komponenten d) oder e) vorhanden ist,
   in Gegenwart von
g) einem oder mehreren Pigment/en.

Eine bevorzugte Ausführungsform der Erfindung umfasst farbige anionische Polyester wie vorstehend definiert, enthaltend mindestens eine der Komponenten b) oder e), d. h. enthaltend mindestens eine Sulfogruppe.

Eine besonders bevorzugte Ausführungsform der Erfindung umfasst farbige anionische Polyester wie vorstehend definiert, enthaltend die Komponenten a), b), c), d), optional e), optional f), und g).

Bevorzugt sind als Komponente a) eine oder mehrere Verbindungen, ausgewählt aus Terephthalsäure, Phthalsäure, Isöphthalsäure, deren Anhydride, sowie deren Mono- und Dialkylester mit C₁-C₆-Alkoholen dieser Dicarbonsäuren. Besonders bevorzugt als Komponente a) sind eine oder mehrere Verbindungen, ausgewählt aus Terephthalsäure, Isophthalsäure, sowie deren Dimethyl-, Diethyl-, Dipropyl- und Dibutylester.

Bevorzugt sind als Komponente b) eine oder mehrere Verbindungen, ausgewählt aus dem Alkali-/ Erdalkali- oder Ammoniumsalz von 2-Naphthyldicarboxybenzolsulfonat, 1-Naphthyldicarboxybenzolsulfonat, Phenyldicarboxylbenzolsulfonat, 2,6-Dimethylphenyl-3,5-Dicarboxybenzolsulfonat, Phenyl-3,4-Dicarboxybenzolsulfonat und 5-Sulfoisophthalsäure, deren Anhydriden, sowie deren Mono- und Dialkylester mit C₁-C₆-Alkoholen. Besonders bevorzugt als Komponente b) sind eine oder mehrere Verbindungen, ausgewählt aus 5-Sulfoisophthalsäuredialkylester, insbesondere 5-Sulfoisophthalsäuredimethylester, Lithium-und Natriumsalz oder Mono-, Di-, Tri- oder Tetraalkylammoniumsalze mit C₁- bis C₂₂-Alkylresten.

Bevorzugt sind als Komponente c) eine oder mehrere Verbindungen, ausgewählt aus Ethylenglykol, Propylenglykol, i-Propylenglykol, n-Butylenglykol, i-Butylenglykol, t-Butylenglykol, Diethylenglykol, Triethylenglykol, Tetraethylenglykol, Pentaethylenglykol, Hexaethylenglykol, Heptaethylenglykol, Octaethylenglykol, Dipropylenglykol, Tripropylenglykol, Polyethylenglykolen mit Molekulargewichten von ca. 600 bis 8000 g/mol, sowie Polypropylenglykolen mit Molekulargewichten von ca. 600 bis 8000 g/mol und Polypropylenethylglykol mit Molekulargewichten von ca. 600 bis 8000 g/mol.

Bevorzugt als Komponente d) ist eine oder sind mehrere Verbindungen aus der Gruppe der einseitig endverschlossene Polyalkylenglykole (Endstopfen), bevorzugt Polyethylenglykolmonoalkylether oder Poly[ethlyenglykol-co- propylenglykol]-monoalkylether mit mittleren Molekulargewichten von ca. 150 bis 2000 g/mol.

Besonders bevorzugt als Komponente d) sind eine oder mehrere Verbindungen gemäß der Formel (1a) CH₃-O-(C₂H₄O)ₙ-H mit n=2 bis 50, bevorzugt 2 bis 10, besonders bevorzugt mit n = 3 bis 5.

Bevorzugte Verbindungen der Komponente e) sind solche der Formel (2a)

H-(OCH₂CH₂)ₘ-SO₃X (2a),

wobei
- m: für eine Zahl von 1 bis 4, besonders bevorzugt 1 oder 2, und
- X: für Wasserstoff, Natrium oder Kalium, steht.

Verbindungen der Komponente f) sind vernetzend wirkende polyfunktionelle Verbindungen mit 3 bis 6 zur Veresterungsreaktion befähigten funktionellen Gruppen, beispielsweise Säure-, Alkohol-, Ester-, Anhydrid- oder Epoxygruppen. Dabei sind auch unterschiedliche Funktionalitäten in einem Molekül möglich. Als bevorzugte Beispiele können hierbei Zitronensäure, Äpfelsäure, Weinsäure und Gallussäure, besonders bevorzugt 2,2-Dihydroxymethylpropionsäure benannt werden.

Weiterhin können mehrwertige Alkohole, wie Pentaerythrol, Glycerin, Sorbitol und Trimethylolpropan eingesetzt werden.

Weiterhin bevorzugt sind mehrwertige aliphatische und aromatische Carbonsäuren, wie Benzol-1,2,3-tricarbonsäure (Hemimellithsäure), Benzol-1,2,4-tricarbonsäure (Trimellithsäure), besonders bevorzugt Benzol-1,3,5-tricarbonsäure (Trimesithsäure).

Des Weiteren können die Polyester zusätzlich zu den oben beschriebenen Komponenten a) bis f) Strukturelemente einer aliphatischen Dicarbonsäure, bevorzugt 1,4-Cyclohexandicarbonsäure, Oxalsäure, Bernsteinsäure, Glutarsäure, Adipinsäure, Fumarsäure, Maleinsäure, Itakonsäure, enthalten.

Der Gewichtsanteil der eingesetzten aliphatischen Dicarbonsäure kann 1 bis 15 %, bevorzugt 3 bis 10 %, besonders bevorzugt 5 bis 8 %, bezogen auf die Gesamtmenge der eingesetzten Monomere, betragen.

Bevorzugt sind Polyester, erhältlich durch Polymerisation der Komponenten a) bis f) in folgenden Molverhältnissen, bezogen auf 1 Mol Komponente a):
0 bis 4 Mol, vorzugsweise 0,1 bis 2 Mol, insbesondere 0,2 bis 1,5 Mol, ganz besonders bevorzugt 0,3 bis 1,1 Mol, Komponente b),
0,1 bis 4 Mol, vorzugsweise 0,5 bis 3 Mol, insbesondere 0,6 bis 2,5 Mol, ganz besonders bevorzugt 0,8 bis 1,5 Mol der Komponente c),
0 bis 4 Mol, vorzugsweise 0,2 bis 2 Mol, insbesondere 0,3 bis 1,0 Mol, ganz besonders bevorzugt 0,3 bis 0,8 Mol, Komponente d),
0 bis 4 Mol, vorzugsweise 0,2 bis 2 Mol, insbesondere 0,2 bis 1,0 Mol, ganz besonders bevorzugt 0,3 bis 0,8 Mol, Komponente e),
0 bis 0,2 Mol, vorzugsweise 0 bis 0,1 Mol, insbesondere 0 Mol, Komponente f), mit der Maßgabe, dass mindestens eine der Komponenten d) oder e) vorhanden ist.

Besonders bevorzugt sind auch Polyester, erhältlich durch Polymerisation der Komponenten a) bis f) in folgenden Molverhältnissen, bezogen auf 1 Mol Komponente a):
0,1 bis 2 Mol, insbesondere 0,2 bis 1,5 Mol, ganz besonders bevorzugt 0,3 bis 1,1 Mol, Komponente b),
0,1 bis 4 Mol, vorzugsweise 0,5 bis 3 Mol, insbesondere 0,6 bis 2,5 Mol, ganz besonders bevorzugt 0,8 bis 1,5 Mol der Komponente c),
0 bis 4 Mol, vorzugsweise 0,2 bis 2 Mol, insbesondere 0,3 bis 1,0 Mol, ganz besonders bevorzugt 0,3 bis 0,8 Mol, Komponente d),
0 bis 4 Mol, vorzugsweise 0,2 bis 2 Mol, insbesondere 0,2 bis 1,0 Mol, ganz besonders bevorzugt 0,3 bis 0,8 Mol, Komponente e),
0 bis 0,2 Mol, vorzugsweise 0 bis 0,1 Mol, insbesondere 0 Mol, Komponente f),
mit der Maßgabe, dass mindestens eine der Komponenten d) oder e) vorhanden ist.

Ganz besonders bevorzugt sind Polyester erhältlich durch Polymerisation der Komponenten a) bis f) in folgenden Molverhältnissen, bezogen auf 1 Mol Komponente a):
0,1 bis 2 Mol, insbesondere 0,2 bis 1,5 Mol, ganz besonders bevorzugt 0,3 bis 1,1 Mol, Komponente b),
0,1 bis 4 Mol, vorzugsweise 0,5 bis 3 Mol, insbesondere 0,6 bis 2,5 Mol, ganz besonders bevorzugt 0,8 bis 1,5 Mol der Komponente c),
0,2 bis 2 Mol, insbesondere 0,3 bis 1,0 Mol, ganz besonders bevorzugt 0,3 bis 0,8 Mol, Komponente d),
0 bis 4 Mol, vorzugsweise 0,2 bis 2 Mol, insbesondere 0,2 bis 1,0 Mol, ganz besonders bevorzugt 0,3 bis 0,8 Mol, Komponente e),
0 bis 0,2 Mol, vorzugsweise 0 bis 0,1 Mol, insbesondere 0 Mol, Komponente f).

Die Polyester haben im Allgemeinen zahlenmittlere Molekulargewichte im Bereich von 700 bis 50.000 g/mol, bevorzugt von 800 bis 25.000 g/mol, insbesondere 1.000 bis 15.000 g/ mol, besonders bevorzugt 1.200 bis 12.000 g/mol. Das zahlenmittlere Molekulargewicht wird bestimmt mittels Größenausschlusschromatographie in wässriger Lösung unter Verwendung einer Kalibrierung mit Hilfe eng verteiltem Polyacrylsäure-Na-Salz Standard.

Alle Molekulargewichtsangaben in dieser Schrift beziehen sich auf das zahlenmittlere Molekulargewicht.

Die farbigen Polyester werden durch Polymerisation der oben genannten Komponenten a) bis f) erhalten, wobei es erfindungswesentlich ist, dass vor oder während des Polymerisationsprozesses die Pigmentkomponente g) zum Reaktionsgemisch zugegeben wird.

Als Komponente g) kommen alle Buntpigmente aus der Gruppe der Anorganischen Pigmente, Organische Pigmente und Effektpigmente in Betracht. Definitionsgemäß sind Pigmente, im Gegensatz zu Farbstoffen, im Anwendungsmedium praktisch unlöslich.

Bevorzugte organische Pigmente sind Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z. B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente.

Von den genannten organischen Pigmenten sind diejenigen besonders geeignet, die möglichst feinteilig sind, wobei bevorzugt 95 % und besonders bevorzugt 99 % der Pigmentpartikel eine Teilchengröße < 500 nm besitzen.

Zweckmäßigerweise haben die Pigmentteilchen einen d₅₀-Wert zwischen 50 und 500 nm, vorzugsweise zwischen 70 und 350 nm.

Als beispielhafte Auswahl besonders bevorzugter organischer Pigmente sind dabei Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Yellow 219, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72, Pigment Blue 80 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81 zu nennen.

Bevorzugte anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente, insbesondere die Colour Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17. Bevorzugt sind auch Mischungen anorganischer Pigmente sowie Mischungen von organischen mit anorganischen Pigmenten.

Die Pigment-Komponente g) kann als Pulverpigment, als Presskuchen, als Dispersion, als feste Pigmentzubereitung oder als flüssige Pigmentpräparation eingesetzt werden. Bevorzugt sind wässrige glykolhaltige Pigmentdispersionen oder-präparationen.

In allen vorstehend genannten Ausführungsformen enthalten die Polyester die Pigment- Komponente g), bezogen auf Trockenpigment, in Mengen von 10⁻⁶ bis 5 Gew.-%, bevorzugt 10⁻⁵ bis 1 Gew.-%, besonders bevorzugt 10⁻⁴ bis 0,5 Gew.-%, bezogen auf 100 Gew.-% farbigem Polyester.

Die Herstellung der farbigen Polyester erfolgt nach an sich bekannten Verfahren durch Polykondensation der Komponenten a) bis f) in Gegenwart der Pigment-Komponente g). Zweckmäßigerweise werden die oben genannten Komponenten a) bis f) unter Zusatz eines Katalysators zunächst bei Normaldruck auf Temperaturen von 160 bis ca. 220 °C unter Verwendung einer Inert-Atmosphäre erhitzt, vorzugsweise in Gegenwart eines Salzes einer C₁-C₃-Alkyl-Carbonsäure, insbesondere ein dehydratisiertes oder partiell hydratisiertes Natriumacetat CH₃COONa x (H₂O)ₓ, wobei ₓ für eine Zahl im Bereich von 0 bis 2,9 steht, und wobei dieses Salz in Gewichtsmengen von 0,5 bis 30 %, bevorzugt von 1 bis 15 %, besonders bevorzugt von 3 bis 8 %, bezogen auf die Gesamtmenge der eingesetzten Monomere und dem Salz der Carbonsäure eingesetzt wird. Vorzugsweise zu diesem Zeitpunkt wird die Pigment-Komponente g) zugesetzt. Dann werden die erforderlichen Molekulargewichte im Vakuum bei Temperaturen von 160 bis ca. 240 °C durch Abdestillieren überstöchiometrischer Mengen der eingesetzten Glykole aufgebaut. Für die Reaktion eignen sich die bekannten Umesterungs- und Kondensationskatalysatoren des Standes der Technik, wie beispielsweise Titantetraisopropylat, Dibutylzinnoxid, Alkali- oder Erdalkalimetallalkoholate oder Antimontrioxid/Calciumacetat. Ein bevorzugtes Verfahren zur Herstellung der farbigen Polyester ist dadurch gekennzeichnet, dass die Kondensation der Komponenten im Eintopfverfahren durchgeführt wird, wobei die Umesterungs- und Kondensationskatalysatoren vor dem Aufheizen zugegeben werden. Die farbigen Polyester fallen bei der Synthese als Schmelze an, die durch Abkühlen in einem kühlen Gasstrom, beispielsweise Luft- oder Stickstoffstrom oder bevorzugt durch Aufbringen auf eine Schuppenwalze oder auf ein Laufband bei 40 bis 80 °C, bevorzugt bei 45 bis 55 °C, zu Schuppen oder Flakes verfestigt wird. Dieses Grobgut wird zweckmäßig auf die gewünschte Endpartikelgröße von vorzugsweise 10 bis 150 µm vermahlen, woran sich ggf. eine Siebung zur Grobkornabtrennung anschließen kann.

Zur Vermahlung eignet sich eine Reihe von Mühlen, die vorzugsweise nach dem Prinzip der Prallzerkleinerung arbeiten. So sind z. B. Hammermühlen, Stiftmühlen oder Strahlmühlen denkbar, die ggf. mit einem integrierten Sichter zur Oberkornbegrenzung ausgerüstet sind. Die Mahlfeinheit des Pulvers lässt sich dabei durch Variation typischer Betriebsparameter (Mühlendrehzahl, Durchsatz) problemlos z. B. von d90,3 = 10 µm bis d90,3 = 150 µm variieren.

In einer weiteren bevorzugten Ausführungsform kann das gemahlene Pulver mit oder ohne Zugabe von weiteren Additiven durch Kompaktierung in ein Granulat überführt werden. Die Kompaktierung des Pulvermaterials wird vorzugsweise auf Walzenkompaktoren (z. B. von Fa. Hosokawa-Bepex, Alexanderwerk, Köppern) durchgeführt. Durch die Wahl des Walzenprofils lassen sich einerseits stückige Pellets oder Briketts und andererseits Presslinge erzeugen. Die Presslinge werden anschließend in einer Mühle auf Granulate mit der gewünschten Partikelgröße von ca. 100 - 1.600 µm zerkleinert.

Eine Granulierung kann auch mittels einer Aufbaugranulierung in einem Mischer erfolgen.

Die Granulierung, insbesondere die Granulierung der Polyester mit Additiven, kann in üblichen, chargenweise oder kontinuierlich arbeitenden Mischvorrichtungen, die in der Regel mit rotierenden Mischorganen ausgerüstet sind, erfolgen. Als Mischer können moderat arbeitende Apparate wie z. B. Pflugscharmischer (Lödige KM-Typen, Drais K-T-Typen) aber auch Intensivmischer (z. B. Eirich, Schugi, Lödige CB-Typen, Drais K-TT-Typen) zum Einsatz kommen. Polyester und Additive können gleichzeitig vermischt werden. Es sind jedoch auch mehrstufige Mischprozesse denkbar, bei denen die Polyester und Additive in verschiedenen Kombinationen einzeln oder zusammen mit weiteren Additiven in die Gesamtmischung eingetragen werden. Die Reihenfolge von Langsam- und Schnellmischer kann je nach Erfordernis vertauscht werden. Die Verweilzeiten in der Mischergranulierung betragen bevorzugt 0,5 s bis 20 min., besonders bevorzugt 2 s bis 10 min.

In einer weiteren Ausführungsform erfolgt die Granulierung durch Formgranulierung. Dem gemahlenen Polyester-Pulver wird ein Additiv zugemischt, so dass die Mischung homogen als eine plastifizierbare Masse vorliegt. Der Mischschritt kann in den o. g. Mischapparaten erfolgen, aber auch Kneter oder spezielle Extrudertypen (z. B. Extrud-o-mix^{®} der Fa. Hosokawa-Bepex Corp.) sind denkbar. Die Granuliermasse wird anschließend mittels Werkzeugen durch die Düsenbohrungen einer Pressmatrize gepresst, so dass zylindrisch geformte Extrudate entstehen. Geeignete Apparate für den Extrusionsprozess sind vorzugsweise Ringkollerpressen (z. B. von Fa. Schlüter), oder Kollergänge (z. B. von Fa. Amandus-Kahl), ggf. auch Extruder, ausgeführt als Einwellenmaschine (z. B. von Fa. Hosokawa-Bepex, Fuji-Paudal) oder bevorzugt als Doppelschneckenextruder (z. B. von Fa. Händle). Die Wahl des Durchmessers der Düsenbohrung ist vom Einzelfall abhängig und liegt typischerweise im Bereich von 0,7 - 4 mm.

Als Additiv in Betracht kommen bevorzugt wasserfreie Produkte, wie Fettalkohole, C₈-C₃₁-Feftalkoholpolyalkoxylate mit 1 bis 100 Molen EO, C₈-C₃₁-Fettsäuren (z. B.: Laurin-, Myristin-, Stearinsäure), Dicarbonsäuren, beispielsweise Glutarsäure, Adipinsäure oder deren Anhydride, anionische oder nichtionische Tenside, Wachse, Silikone, anionische und kationische Polymere, Homo-, Co- oder Pfropfcopolymerisate ungesättigter Carbonsäuren und/oder Sulfonsäuren sowie deren Alkalisalze, Celluloseether, Stärke, Stärkeether, Polyvinylpyrrolidon;
ein- oder mehrwertige Carbonsäuren, Hydroxycarbonsäuren oder Ethercarbonsäuren mit je 3 bis 8 C-Atomen sowie deren Salze; sowie Polyalkylenglykole. Als Polyalkylenglykole kommen Polyethylenglykole, 1,2-Polypropylenglykole sowie modifizierte Polyethylenglykole und Polypropylenglykole in Betracht. Zu den modifizierten Polyalkylenglykolen zählen insbesondere Sulfate und/oder Disulfate von Polyethylenglykolen oder Polypropylenglykolen mit einer relativen Molekülmasse zwischen 600 und 12.000 und insbesondere zwischen 1.000 und 4.000. Eine weitere Gruppe besteht aus Mono- und/oder Disuccinaten der Polyalkylenglykole, welche wiederum relative Molekülmassen zwischen 600 und 6.000 g/mol, vorzugsweise zwischen 1.000 und 4.000 g/mol, aufweisen. Ferner werden auch ethoxylierte Derivate wie Trimethylolpropan mit 5 bis 30 EO umfasst.

Die Additive können in Abhängigkeit von den chemischen Eigenschaften in fester Form, als Schmelze oder als wässrige Lösungen eingesetzt werden.

Die farbigen Polyester-Granulate können 0 bis 30 Gew.-% eines oder mehrerer der genannten Additive, bevorzugt 0 bis 25 Gew.-%, besonders bevorzugt 0 bis 20 Gew.-%, bezogen auf das farbige Polyester-Granulat enthalten.

Die farbigen Polyester können auch als Mischung mit Hydrotropen aus der Gruppe der Fettalkoholsulfate, Alkylsulfate, α-Olefinsulfonate dargeboten werden, wobei Alkylarylsulfonate und Arylsulfonate, insbesondere Cumol-, Toluol- und Xylolsulfonate und Mischungen daraus bevorzugt sind. Sofern vorhanden, beträgt der Anteil an Hydrotropen zweckmäßigerweise von 0,1 % bis 15 % Gewichtsprozent, bevorzugt 1 bis 10 Gew.-%, bezogen auf den Polyester-Feststoff.

Die farbigen Polyester haben ein äußerst geringes Anfärbungspotential auf Haut, Kleidung und harten Oberflächen und sind sehr gut wasserlöslich. Zubereitungen, enthaltend diese farbigen Polyester sind leicht rückstandsfrei abwaschbar.

Der Gegenstand der Erfindung ist die Verwendung der farbigen Polyester in Wasch- und Reinigungsmitteln.

Die Wasch- und Reinigungsmittelformulierungen, in denen die erfindungsgemäßen farbigen Polyester eingesetzt werden können, sind pulver- oder granulat-förmig.

Beispiele hierfür sind Vollwaschmittel, Feinwaschmittel, Colorwaschmittel, Wollwaschmittel, Gardinenwaschmittel, Baukastenwaschmittel, Waschtabletten, bar soaps, Fleckensalze, Wäschestärken und -steifen, Bügelhilfen.

Die farbigen Polyester können somit auch in Haushaltsreinigungsmittel, beispielsweise Allzweckreiniger, Geschirrspülmittel, Klarspülmittel, Teppichreinigungs- und Imprägniermittel, Reinigungs- und Pflegemittel für Böden und andere harte Oberfläche, z. B. aus Kunststoff, Keramik, Glas oder mit Nanoteilchen beschichteten Oberflächen eingearbeitet werden. Beispiele für technische Reinigungsmittel sind Kunststoffreinigungs- und Pflegemittel, etwa für Gehäuse und Autoarmaturen, sowie Reinigungs- und Pflegemittel für lackierte Oberflächen wie etwa Autokarosserien.

Wasch- und Reinigungsmittelformulierungen enthalten bevorzugt mindestens 0,01 Gew.-%, bevorzugt zwischen 0,1 und 10 Gew.-% und besonders bevorzugt 0,2 bis 3 % Gew.-% der erfindungsgemäßen farbigen Polyester, bezogen auf das Gesamtgewicht der Wasch- und Reinigungsmittelformulierungen.

Die Formulierungen sind je nach ihrer vorgesehenen Anwendung in ihrer Zusammensetzung der Art der zu behandelnden oder zu waschenden Textilien oder der zu reinigenden Oberflächen anzupassen.

Die erfindungsgemäßen Wasch- und Reinigungsmittel können gängige Inhaltsstoffe, wie Tenside, Emulgatoren, Gerüststoffe, Bleichkatalysatoren und -Aktivatoren, Sequestriermittel, Vergrauungsinhibitoren, Farbübertragungsinhibitoren, Farbfixiermittel, Enzyme, optische Aufheller und weich machende Komponenten enthalten. Außerdem können Formulierungen oder Teile der Formulierung durch Farbstoffe und/oder Duftstoffe gezielt eingefärbt und/oder parfümiert werden.

### Beispiel 1: Polyester 1

In einem 2-I Vierhalskolben mit KPG-Rührer, Innenthermometer, Gaseinleitungsrohr und Destillierbrücke wurden 281,5 g 1,2-Propandiol (3,71 Mol), 229,6 g Ethylenglykol (3,70 Mol), 250 g PEG-250-monomethylether, 970,9 g (5,00 Mol) Terephthalsäuredimethylester und 236,98 g (0,8 Mol) 5-Sulfoisophthalsäure-dimethylester-Na-Salz vorgelegt und das Reaktionsgemisch anschließend durch Einleitung von N₂ inertisiert. Im Gegenstrom wurde anschließend 1 g Titantetraisopropylat und 0,8 g Natriumacetat zur Reaktionsmischung hinzugegeben. Das Gemisch wurde am Ölbad langsam aufgeheizt, wobei ab etwa 120-150 °C Innentemperatur die festen Komponenten anfingen aufzuschmelzen. Unter Rühren wurde nun innerhalb von 30 min auf 190 °C erhitzt. Bei ca. 173 °C begann die Umesterung bzw. Destillation. Im Laufe von 2 h Stunden wurde die Innentemperatur auf 210 °C gesteigert, bis die gemäß Stöchiometrie erforderliche Kondensatmenge erreicht war. Unter Schutzgas wurde nach beendeter Umesterungsreaktion und leichtem Absenken der Innentemperatur auf 190 °C die benötigte Menge Pigment Blue 15:3 (0,2 Gew.-% bezogen auf die berechnete Polymerauswaage als 40 %ige Dispersion in Propylenglykol) zur Reaktionsmischung hinzugegeben.

Danach wurde die Ölbadtemperatur auf ca. 240 bis 250 °C gesteigert und der Innendruck innerhalb von 30 Minuten auf bestes Ölpumpenvakuum abgesenkt. Während der dreistündigen Vakuumphase wurde die Kondensation durch Abdestillation der überschüssigen Alkoholmenge vervollständigt. Während dieser Zeit erhöhte sich die Innentemperatur der Polyesterschmelze langsam bis auf etwa 220 °C am Ende der Reaktion. Anschließend wurde mit N₂ belüftet und die Schmelze auf Bleche ausgetragen. Man erhielt eine tiefblaue Polymerschmelze.

### Beispiel 2: Polyester 2

In einem 3-I Vierhalskolben mit KPG-Rührer, Innenthermometer, Gaseinleitungsrohr und Destillierbrücke wurden 418,5 g 1,2-Propandiol, 279,3 g Ethylenglykol, 212,4 g Tetraethylenglykolmonomethylether, 1359,3 g Terephthalsäuredimethylester und 296,22 g 5-Sulfoisophthalsäuredimethylester-Na-Salz und 250 g Polyethylenglykol 250 vorgelegt und das Reaktionsgemisch anschließend durch Einleitung von N₂ inertisiert. Im Gegenstrom wurde anschließend 1,5 g Natriummethylat und 0,5 g Natriumcarbonat zur Reaktionsmischung hinzugegeben. Das Gemisch wurde am Ölbad langsam aufgeheizt, wobei ab etwa 120 - 150 °C Innentemperatur die festen Komponenten anfingen aufzuschmelzen. Unter Rühren wurde nun innerhalb von 30 min auf 190 °C erhitzt. Bei ca. 173 °C begann die Umesterung bzw. Destillation. Im Laufe von 2 h Stunden wurde die Innentemperatur auf 210 °C gesteigert, bis die gemäß Stöchiometrie erforderliche Kondensatmenge erreicht war. Unter Schutzgas wurde nach beendeter Umesterungsreaktion und leichtem Absenken der Innentemperatur auf 190 °C die benötigte Menge Pigment Red 122 (0,1 Gew.-% bezogen auf die berechnete Polymerauswaage als 40 %ige Dispersion in Propylenglykol) zur Reaktionsmischung hinzugegeben.

Danach wurde die Ölbadtemperatur auf ca. 240 - 250 °C gesteigert und der Innendruck innerhalb von 30 Minuten auf bestes Ölpumpenvakuum abgesenkt. Während der dreistündigen Vakuumphase wurde die Kondensation durch Abdestillation der überschüssigen Alkoholmenge vervollständigt. Während dieser Zeit erhöhte sich die Innentemperatur der Polyesterschmelze langsam bis auf etwa 220 °C am Ende der Reaktion. Anschließend wurde mit N₂ belüftet und die Schmelze auf Bleche ausgetragen. Man erhielt eine rosarote Polymerschmelze.

### Beispiel 3: Polyester 3

In einem 3-I Vierhalskolben mit KPG-Rührer, Innenthermometer, Gaseinleitungsrohr und Destillierbrücke wurden 281,5 g 1,2-Propandiol, 223,4 g Ethylenglykol, 202 g Triethylenglykolmonomethylether, 582,5 g Terephthalsäuredimethylester und 296,22 g 5-Sulfoisophthalsäuredimethylester-Na-Salz vorgelegt und das Reaktionsgemisch anschließend durch Einleitung von N₂ inertisiert. Im Gegenstrom wurde anschließend 1,02 g Titantetraisopropylat und 0,8 g Natriumacetat zur Reaktionsmischung hinzugegeben. Das Gemisch wurde am Ölbad langsam aufgeheizt, wobei ab etwa 120 - 150 °C Innentemperatur die festen Komponenten anfingen aufzuschmelzen. Unter Rühren wird nun innerhalb von 45 min auf 195 °C erhitzt. Bei ca. 173 °C begann die Umesterung bzw. Destillation. Im Laufe von 3 h Stunden wurde die Innentemperatur auf 210 °C gesteigert, bis die gemäß Stöchiometrie erforderliche Kondensatmenge erreicht war. Unter Schutzgas wurde nach beendeter Umesterungsreaktion und leichtem Absenken der Innentemperatur auf 190 °C die benötigte Menge Pigment Violet 23 (0,1 Gew.-% bezogen auf die berechnete Polymerauswaage als 40 %ige Dispersion in Propylenglykol) zur Reaktionsmischung hinzugegeben.

Danach wurde die Ölbadtemperatur auf ca. 240 - 255 °C gesteigert und der Innendruck innerhalb von 60 Minuten auf < 20 mbar abgesenkt. Während der vierstündigen Vakuumphase wurde die Kondensation durch Abdestillation der überschüssigen Alkoholmenge vervollständigt. Während dieser Zeit erhöht sich die Innentemperatur der Polyesterschmelze langsam bis auf 225 °C am Ende der Reaktion. Anschließend wurde mit N₂ belüftet und die Schmelze auf Bleche ausgetragen. Man erhielt eine violette Polymerschmelze.

### Beispiel 4: Polyester 4

### Reaktionsführung gemäß Beispiel 2

| | | |
|---|---|---|
| Komponenten: | 281,5 g | 1,2-Propandiol |
| | 223,4 g | Ethylenglykol |
| | 776,7 g | Terephthalsäuredimethylester |
| | 355,5 g | 5-Sulfoisophthalsäuredimethylester-Na-Salz |
| | 295,5 g | Talgfettalkohol mit 8 Einheiten Ethylenoxid |
| | 1,00 g | Titantetraisopropylat |
| | 0,8 g | Natriumacetat |
| | 1 g | C.I. Pigment Red 254 |

### Beispiel 5: Polyester 5

### Reaktionsführung gemäß Beispiel 3

| | | |
|---|---|---|
| Komponenten: | 620,6 g | Ethylenglykol |
| | 970,9 g | Terephthalsäuredimethylester |
| | 444,3 g | 5-Sulfoisophthalsäuredimethylester-Na-Salz |
| | 162 g | Triethylenglykolmonobutylether |
| | 1,00 g | Titantetraisopropylat |
| | 0,8 g | Natriumacetat |
| | 0,1 g | C.I. Pigment Red 254 |

### Beispiel 6: Polyester 6

### Reaktionsführung gemäß Beispiel 1

| | | |
|---|---|---|
| Komponenten: | 152,2 g | 1,2-Propandiol |
| | 124,1 g | Ethylenglykol |
| | 388,3 g | Terephthalsäuredimethylester |
| | 177,7 g | 5-Sulfoisophthalsäure-Li-Salz |
| | 100 g | Laurylalkohol mit 7 Einheiten Ethylenoxid |
| | 1,00 g | Titantetraisopropylat |
| | 0,5 g | C.I. Pigment Yellow 122 |

### Beispiel 7: Polyester 7

### Reaktionsführung gemäß Beispiel 1

| | | |
|---|---|---|
| Komponenten: | 422,3 g | 1,2-Propandiol |
| | 335,1 g | Ethylenglykol |
| | 873,8 g | Terephthalsäuredimethylester |
| | 177,7 g | 5-Sulfoisophthalsäure-Na-Salz |
| | 100 g | Triethylenglykolmonomethylether |
| | 50 g | Polyethylenglykol 500 |
| | 50 g | Polyethylenglykol 1500 |
| | 1,00 g | Titantetraisopropylat |
| | 0,01 g | C.I. Pigment Green 36 |

### Beispiel 8: Polyester 8

### Reaktionsführung gemäß Beispiel 1

| | | |
|---|---|---|
| Komponenten: | 380,5 g | 1,2-Propandiol |
| | 186,2 g | Ethylenglykol |
| | 873,8 g | Terephthalsäuredimethylester |
| | 444,3 g | 5-Sulfoisophthalsäure-Na-Salz |
| | 125 g | Tripropylenglykolmonomethylether |
| | 150 g | Ethylenoxid-Propylenoxid Copolymer (Genapol PF 20) |
| | 1,00 g | Titantetraisopropylat |
| | 0,05 g | C.I. Pigment Blue 80 |

### Beispiel 9: Polyester 9

### Reaktionsführung gemäß Beispiel 1

| | | |
|---|---|---|
| Komponenten: | 280,0 g | 1,2-Propandiol |
| | 241,0 g | Ethylenglykol |
| | 582,0 g | Terephthalsäuredimethylester |
| | 296,0 g | 5-Sulfoisophthalsäuredimethylester-Na-Salz |
| | 143,0 g | Tetraethylenglykolmonomethylether |
| | 0,6 g | Natriumacetat |
| | 1,00 g | Titantetraisopropylat |
| | 0,05 g | C.I. Pigment Blue 15:6 |

### Formulierungsbeispiele

### Phosphathaltiges Maschinengeschirrspülmittelpulver:

| | |
|---|---|
| Natriumtripolyphosphat | 43,5 % |
| SKS-6 HD-D (Schichtsilikat) | 10,0 % |
| Soda schwer | 29,5 % |
| Polyester 1 | 1,00 % |
| Percarbonat | 10,0 % |
| TAED (Peractive CB) | 2,0 % |
| Nichtionisches Tensid (Genapol EP 0244) | 1,5 % |
| Protease (Savinase 8.0 T (Novozymes)) | 1,5 % |
| Amylase (Termamyl 120 T (Novozymes)) | 1,0 % |

### Phosphatreduziertes Maschinengeschirrspülmittel (Tab, multifunktional)

| | |
|---|---|
| Natriumtripolyphosphat | 24,0 % |
| Soda | 33,0 % |
| Polyester 4 | 1,00 % |
| Disilikat | 5,0 % |
| Natriumcitrat | 7,2 % |
| Percarbonat | 10,0 % |
| TAED | 2,0 % |
| Nichtionisches Tensid (Genapol EP 2584) | 1,5 % |
| Polyglykol | 8,5 % |
| Polycarboxylat | 5,0 % |
| Enzyme | 2,5 % |
| Parfüm | 0,3 % |

### Phosphatfreies Maschinengeschirrspülmittel (Tab, multifunktional)

| | |
|---|---|
| SKS-6 HD | 10,0 % |
| Soda schwer | 27,5 % |
| Natriumcitrat | 29,5 % |
| Polyester 3 | 1,00 % |
| Percarbonat | 10,0 % |
| TAED | 3,0 % |
| Polycarboxylat | 5,5 % |
| Enzyme (Protease, Amylase) | 3,0 % |
| Genapol EP 2584 | 4,0 % |
| Polyglykol | 5,2 % |
| Parfüm | 0,3 % |

### Chlorhaltiges Maschinengeschirrspülmittel für USA:

| | |
|---|---|
| Natriumtripolyphosphat | 33,5 % |
| Soda | 26,5 % |
| Disilikat, amorph oder kristallin | 9,0 % |
| Natriumsulfat | 26,5 % |
| Polyester 1 | 1,5 % |
| Nichtionisches Tensid (Genapol EP 0244) | 1,5 % |
| Natriumdichlorcyanurat | 1,5 % |

## Patentansprüche

1. Verwendung von farbigen Polyestern in fester Form in Wasch- und Reinigungsmitteln, **dadurch gekennzeichnet, dass** die farbigen Polyester erhalten werden durch Polymerisation von Komponenten umfassend
a) eine oder mehrere sulfogruppenfreie, aromatische Dicarbonsäuren und/ oder deren Salze und/ oder deren Anhydride und/oder deren Ester,
b) optional eine oder mehrere sulfogruppenhaltige Dicarbonsäuren, deren Salze und/oder deren Anhydride und/oder deren Ester,
c) ein oder mehrere Diole,
d) optional eine oder mehrere Verbindungen der Formel (1)
R¹O(CHR²CHR³O)ₙH (1)
wobei
R¹ für eine lineare oder verzweigte, gesättigte oder ungesättigte Alkylgruppe mit 1 bis 22 C-Atomen steht,
R² und R³ unabhängig voneinander für Wasserstoff oder für eine Alkylgruppe mit 1 bis 4 Kohlenstoffatomen stehen und
n eine Zahl von 1 bis 50 ist,
e) optional eine oder mehrere Verbindungen der Formel (2)
H-(OCHR²CHR³)ₘ-SO₃X (2),
wobei
R² und R³ unabhängig voneinander für Wasserstoff oder für eine Alkylgruppe mit 1 bis 4 Kohlenstoffatomen stehen und
m für eine Zahl 1 bis 10 und
X für Wasserstoff oder ein Alkalimetallion steht, und
f) optional ein oder mehrere vernetzend wirkende polyfunktionelle Verbindungen,
mit 3 bis 6 zur Polykondensation befähigter Funktionen, insbesondere Säure-, Alkohol- oder Esterfunktionen
mit der Maßgabe, dass mindestens eine der Komponenten d) oder e) vorhanden ist,
in Gegenwart von
g) einem oder mehreren Pigment/en.

2. Verwendung nach Anspruch 1, **dadurch gekennzeichnet, dass** die farbigen Polyester mindestens eine der Komponenten b) oder e) enthalten.

3. Verwendung nach Anspruch 1 oder 2, **dadurch gekennzeichnet, dass** die farbigen Polyester die Komponenten a), b), c), d), optional e), optional f), und g) enthalten.

4. Verwendung nach einem oder mehreren der Ansprüche 1 bis 3, **dadurch gekennzeichnet, dass** die farbigen Polyester erhältlich sind durch Polymerisation der Komponenten a) bis f) in folgenden Molverhältnissen, bezogen auf 1 Mol Komponente a):
0 bis 4 Mol, vorzugsweise 0,1 bis 2 Mol, insbesondere 0,2 bis 1,5 Mol, ganz besonders bevorzugt 0,3 bis 1,1 Mol, Komponente b),
0,1 bis 4 Mol, vorzugsweise 0,5 bis 3 Mol, insbesondere 0,6 bis 2,5 Mol, ganz besonders bevorzugt 0,8 bis 1,5 Mol der Komponente c),
0 bis 4 Mol, vorzugsweise 0,2 bis 2 Mol, insbesondere 0,3 bis 1,0 Mol, ganz besonders bevorzugt 0,3 bis 0,8 Mol, Komponente d),
0 bis 4 Mol, vorzugsweise 0,2 bis 2 Mol, insbesondere 0,2 bis 1,0 Mol, ganz besonders bevorzugt 0,3 bis 0,8 Mol, Komponente e),
0 bis 0,2 Mol, vorzugsweise 0 bis 0,1 Mol, insbesondere 0 Mol, Komponente f),
mit der Maßgabe, dass mindestens eine der Komponenten d) oder e) vorhanden ist.

5. Verwendung nach einem oder mehreren der Ansprüche 1 bis 3, **dadurch gekennzeichnet, dass** die farbigen Polyester erhältlich sind durch Polymerisation der Komponenten a) bis f) in folgenden Molverhältnissen, bezogen auf 1 Mol Komponente a):
0,1 bis 2 Mol, insbesondere 0,2 bis 1,5 Mol, ganz besonders bevorzugt 0,3 bis 1,1 Mol, Komponente b),
0,1 bis 4 Mol, vorzugsweise 0,5 bis 3 Mol, insbesondere 0,6 bis 2,5 Mol, ganz besonders bevorzugt 0,8 bis 1,5 Mol der Komponente c),
0 bis 4 Mol, vorzugsweise 0,2 bis 2 Mol, insbesondere 0,3 bis 1,0 Mol, ganz besonders bevorzugt 0,3 bis 0,8 Mol, Komponente d),
0 bis 4 Mol, vorzugsweise 0,2 bis 2 Mol, insbesondere 0,2 bis 1,0 Mol, ganz besonders bevorzugt 0,3 bis 0,8 Mol, Komponente e),
0 bis 0,2 Mol, vorzugsweise 0 bis 0,1 Mol, insbesondere 0 Mol, Komponente f),
mit der Maßgabe, dass mindestens eine der Komponenten d) oder e) vorhanden ist.

6. Verwendung nach einem oder mehreren der Ansprüche 1 bis 3, **dadurch gekennzeichnet, dass** die farbigen Polyester erhältlich sind durch Polymerisation der Komponenten a) bis f) in folgenden Molverhältnissen, bezogen auf 1 Mol Komponente a):
0,1 bis 2 Mol, insbesondere 0,2 bis 1,5 Mol, ganz besonders bevorzugt 0,3 bis 1,1 Mol, Komponente b),
0,1 bis 4 Mol, vorzugsweise 0,5 bis 3 Mol, insbesondere 0,6 bis 2,5 Mol, ganz besonders bevorzugt 0,8 bis 1,5 Mol der Komponente c),
0,2 bis 2 Mol, insbesondere 0,3 bis 1,0 Mol, ganz besonders bevorzugt 0,3 bis 0,8 Mol, Komponente d),
0 bis 4 Mol, vorzugsweise 0,2 bis 2 Mol, insbesondere 0,2 bis 1,0 Mol, ganz besonders bevorzugt 0,3 bis 0,8 Mol, Komponente e),
0 bis 0,2 Mol, vorzugsweise 0 bis 0,1 Mol, insbesondere 0 Mol, Komponente f).

7. Verwendung nach einem oder mehreren der Ansprüche 1 bis 6, **dadurch gekennzeichnet, dass** die farbigen Polyester ein zahlenmittleres Molekulargewicht im Bereich von 700 bis 50.000 g/mol besitzen.

8. Verwendung nach einem oder mehreren der Ansprüche 1 bis 7, **dadurch gekennzeichnet, dass** die Komponente g) der farbigen Polyester ein Buntpigment aus der Gruppe der Anorganischen Pigmente, Organische Pigmente und Effektpigmente ist.

9. Verwendung nach einem oder mehreren der Ansprüche 1 bis 8, **dadurch gekennzeichnet, dass** die Komponente g) der farbigen Polyester ein organisches Pigment aus der Gruppe der Monoazo-, Disazo-, verlackte Azo-, β-Naphthol-, Naphthol AS-, Benzimidazolon-, Disazokondensations-, Azo-Metallkomplex-Pigmente, Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente ist.

10. Verwendung nach einem oder mehreren der Ansprüche 1 bis 8, **dadurch gekennzeichnet, dass** die Pigment- Komponente g) der farbigen Polyester, bezogen auf Trockenpigment, in Mengen von 10⁻⁶ bis 5 Gew.-%, bevorzugt 10⁻⁵ bis 1 Gew.-%, besonders bevorzugt 10⁻⁴ bis 0,5 % Gew.-%, bezogen auf 100 Gew.-% farbigem Polyester, enthalten ist.

11. Wasch- oder Reinigungsmittelformulierung, enthaltend mindestens 0,01 Gew.-%, bevorzugt zwischen 0,1 und 10 Gew.-% und besonders bevorzugt 0,2 bis 3 % Gew.-%, eines farbigen Polyesters gemäß einem oder mehreren der Ansprüche 1 bis 10, bezogen auf das Gesamtgewicht der Wasch- oder Reinigungsmittelformulierung.

## Claims

1. The use of colored polyesters in solid form in washing and cleaning compositions, wherein the colored polyesters are obtained by polymerizing components comprising
a) one or more sulfo-free aromatic dicarboxylic acids and/or salts thereof and/or anhydrides thereof and/or esters thereof,
b) optionally one or more sulfo-containing dicarboxylic acids, salts thereof and/or anhydrides thereof and/or esters thereof,
c) one or more diols,
d) optionally one or more compounds of the formula (1)
R¹O(CHR²CHR³O)ₙH (1)
where
R¹ is a linear or branched, saturated or unsaturated alkyl group having 1 to 22 carbon atoms,
R² and R³ are each independently hydrogen or an alkyl group having 1 to 4 carbon atoms and
n is a number from 1 to 50,
e) optionally one or more compounds of the formula (2)
H-(OCHR²CHR³)ₘ-SO₃X (2)
where
R² and R³ are each independently hydrogen or an alkyl group having 1 to 4 carbon atoms and
m is a number from 1 to 10 and
X is hydrogen or an alkali metal ion, and
f) optionally one or more crosslinking polyfunctional compounds having 3 to 6 functions capable of polycondensation, especially acid, alcohol or ester functions,
with the proviso that at least one of components d) and e) is present, in the presence of
g) one or more pigment(s).

2. The use as claimed in claim 1, wherein the colored polyesters comprise at least one of components b) and e).

3. The use as claimed in claim 1 or 2, wherein the colored polyesters comprise components a), b), c), d), optionally e), optionally f), and g).

4. The use as claimed in one or more of claims 1 to 3, wherein the colored polyesters are obtainable by polymerizing components a) to f) in the following molar ratios, based on 1 mol of component a):
0 to 4 mol, preferably 0.1 to 2 mol, especially 0.2 to 1.5 mol and most preferably 0.3 to 1.1 mol of component b),
0.1 to 4 mol, preferably 0.5 to 3 mol, especially 0.6 to 2.5 mol and most preferably 0.8 to 1.5 mol of component c),
0 to 4 mol, preferably 0.2 to 2 mol, especially 0.3 to 1.0 mol and most preferably 0.3 to 0.8 mol of component d),
0 to 4 mol, preferably 0.2 to 2 mol, especially 0.2 to 1.0 mol and most preferably 0.3 to 0.8 mol of component e),
0 to 0.2 mol, preferably 0 to 0.1 mol and especially 0 mol of component f), with the proviso that at least one of components d) and e) is present.

5. The use as claimed in one or more of claims 1 to 3, wherein the colored polyesters are obtainable by polymerizing components a) to f) in the following molar ratios, based on 1 mol of component a):
0.1 to 2 mol, especially 0.2 to 1.5 mol and most preferably 0.3 to 1.1 mol of component b),
0.1 to 4 mol, preferably 0.5 to 3 mol, especially 0.6 to 2.5 mol and most preferably 0.8 to 1.5 mol of component c),
0 to 4 mol, preferably 0.2 to 2 mol, especially 0.3 to 1.0 mol and most preferably 0.3 to 0.8 mol of component d),
0 to 4 mol, preferably 0.2 to 2 mol, especially 0.2 to 1.0 mol and most preferably 0.3 to 0.8 mol of component e),
0 to 0.2 mol, preferably 0 to 0.1 mol and especially 0 mol of component f), with the proviso that at least one of components d) and e) is present.

6. The use as claimed in one or more of claims 1 to 3, wherein the colored polyesters are obtainable by polymerizing components a) to f) in the following molar ratios, based on 1 mol of component a):
0.1 to 2 mol, especially 0.2 to 1.5 mol and most preferably 0.3 to 1.1 mol of component b),
0.1 to 4 mol, preferably 0.5 to 3 mol, especially 0.6 to 2.5 mol and most preferably 0.8 to 1.5 mol of component c),
0.2 to 2 mol, especially 0.3 to 1.0 mol and most preferably 0.3 to 0.8 mol of component d),
0 to 4 mol, preferably 0.2 to 2 mol, especially 0.2 to 1.0 mol and most preferably 0.3 to 0.8 mol of component e),
0 to 0.2 mol, preferably 0 to 0.1 mol and especially 0 mol of component f).

7. The use as claimed in one or more of claims 1 to 6, wherein the colored polyesters have a number-average molar weight in the range from 700 to 50 000 g/mol.

8. The use as claimed in one or more of claims 1 to 7, wherein component g) of the colored polyesters is a color pigment from the group of the inorganic pigments, organic pigments and effect pigments.

9. The use as claimed in one or more of claims 1 to 8, wherein component g) of the colored polyesters is an organic pigment from the group of the monoazo, disazo, laked azo, β-naphthol, naphthol AS, benzimidazolone, disazo condensation, azo metal complex pigments, phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline and diketopyrrolopyrrole pigments.

10. The use as claimed in one or more of claims 1 to 8, wherein pigment component g) of the colored polyesters, based on dry pigment, is present in amounts of 10⁻⁶ to 5% by weight, preferably 10⁻⁵ to 1% by weight, more preferably 10⁻⁴ to 0.5% by weight, based on 100% by weight of colored polyester.

11. A washing or cleaning composition formulation comprising at least 0.01% by weight, preferably between 0.1 and 10% by weight and more preferably 0.2 to 3% by weight of a colored polyester as claimed in one or more of claims 1 to 10, based on the total weight of the washing or cleaning composition formulation.

## Revendications

1. Utilisation de polyesters colorés sous forme solide dans des détergents, **caractérisée en ce que** les polyesters colorés sont obtenus par polymérisation de composants comprenant :
a) un ou plusieurs acides dicarboxyliques aromatiques exempts de groupes sulfo et/ou leurs sels et/ou leurs anhydrides et/ou leurs esters,
b) éventuellement un ou plusieurs acides dicarboxyliques contenant des groupes sulfo, leurs sels et/ou leurs anhydrides et/ou leurs esters,
c) un ou plusieurs diols,
d) éventuellement un ou plusieurs composés de formule (1)
R¹O(CHR²CHR³O)ₙH (1)
dans laquelle
R¹ représente un groupe alkyle linéaire ou ramifié, saturé ou insaturé, de 1 à 22 atomes C,
R² et R³ représentent indépendamment l'un de l'autre l'hydrogène ou un groupe alkyle de 1 à 4 atomes de carbone, et
n représente un nombre de 1 à 50,
e) éventuellement un ou plusieurs composés de formule (2)
H-(OCHR²CHR³)ₘ-SO₃X (2)
dans laquelle
R² et R³ représentent indépendamment l'un de l'autre l'hydrogène ou un groupe alkyle de 1 à 4 atomes de carbone, et
m représente un nombre de 1 à 10, et
X représente l'hydrogène ou un ion de métal alcalin,
et
f) éventuellement un ou plusieurs composés polyfonctionnels à effet réticulant,
comprenant 3 à 6 fonctions aptes à la polycondensation, notamment des fonctions acide, alcool ou ester,
à condition qu'au moins un des composants d) ou e) soit présent,
en présence de
g) un ou plusieurs pigments.

2. Utilisation selon la revendication 1, **caractérisée en ce que** les polyesters colorés contiennent au moins un des composants b) ou e).

3. Utilisation selon la revendication 1 ou 2, **caractérisée en ce que** les polyesters colorés contiennent les composants a), b), c), d), éventuellement e), éventuellement f) et g).

4. Utilisation selon une ou plusieurs des revendications 1 à 3, **caractérisée en ce que** les polyesters colorés peuvent être obtenus par polymérisation des composants a) à f) en les rapports molaires suivants, par rapport à 1 mole de composant a) :
0 à 4 moles, de préférence 0,1 à 2 moles, notamment 0,2 à 1,5 mole, de manière tout particulièrement préférée 0,3 à 1,1 mole, de composant b),
0,1 à 4 mole, de préférence 0,5 à 3 mole, notamment 0,6 à 2,5 mole, de manière tout particulièrement préférée 0,8 à 1,5 mole, de composant c),
0 à 4 mole, de préférence 0,2 à 2 mole, notamment 0,3 à 1,0 mole, de manière tout particulièrement préférée 0,3 à 0,8 mole, de composant d),
0 à 4 mole, de préférence 0,2 à 2 mole, notamment 0,2 à 1,0 mole, de manière tout particulièrement préférée 0,3 à 0,8 mole, de composant e),
0 à 0,2 mole, de préférence 0 à 0,1 mole, notamment 0 mole de composant f),
à condition qu'au moins un des composants d) ou e) soit présent.

5. Utilisation selon une ou plusieurs des revendications 1 à 3, **caractérisée en ce que** les polyesters colorés peuvent être obtenus par polymérisation des composants a) à f) en les rapports molaires suivants, par rapport à 1 mole de composant a) :
0,1 à 2 moles, notamment 0,2 à 1,5 mole, de manière tout particulièrement préférée 0,3 à 1,1 mole, de composant b),
0,1 à 4 mole, de préférence 0,5 à 3 mole, notamment 0,6 à 2,5 mole, de manière tout particulièrement préférée 0,8 à 1,5 mole, de composant c),
0 à 4 mole, de préférence 0,2 à 2 mole, notamment 0,3 à 1,0 mole, de manière tout particulièrement préférée 0,3 à 0,8 mole, de composant d),
0 à 4 mole, de préférence 0,2 à 2 mole, notamment 0,2 à 1,0 mole, de manière tout particulièrement préférée 0,3 à 0,8 mole, de composant e),
0 à 0,2 mole, de préférence 0 à 0,1 mole, notamment 0 mole de composant f),
à condition qu'au moins un des composants d) ou e) soit présent.

6. Utilisation selon une ou plusieurs des revendications 1 à 3, **caractérisée en ce que** les polyesters colorés peuvent être obtenus par polymérisation des composants a) à f) en les rapports molaires suivants, par rapport à 1 mole de composant a) :
0,1 à 2 moles, notamment 0,2 à 1,5 mole, de manière tout particulièrement préférée 0,3 à 1,1 mole, de composant b),
0,1 à 4 mole, de préférence 0,5 à 3 mole, notamment 0,6 à 2,5 mole, de manière tout particulièrement préférée 0,8 à 1,5 mole, de composant c),
0,2 à 2 mole, notamment 0,3 à 1,0 mole, de manière tout particulièrement préférée 0,3 à 0,8 mole, de composant d),
0 à 4 mole, de préférence 0,2 à 2 mole, notamment 0,2 à 1,0 mole, de manière tout particulièrement préférée 0,3 à 0,8 mole, de composant e),
0 à 0,2 mole, de préférence 0 à 0,1 mole, notamment 0 mole de composant f).

7. Utilisation selon une ou plusieurs des revendications 1 à 6, **caractérisée en ce que** les polyesters colorés présentent un poids moléculaire moyen en nombre dans la plage allant de 700 à 50 000 g/mol.

8. Utilisation selon une ou plusieurs des revendications 1 à 7, **caractérisée en ce que** le composant g) des polyesters colorés est un pigment coloré du groupe constitué par les pigments inorganiques, les pigments organiques et les pigments à effet.

9. Utilisation selon une ou plusieurs des revendications 1 à 8, **caractérisée en ce que** le composant g) des polyesters colorés est un pigment organique du groupe des pigments monoazoïques, disazoïques, azoïques laqués, β-naphtoliques, naphtoliques AS, benzimidazolone, disazoïques de condensation, azoïques à complexe métallique, des pigments phtalocyanine, quinacridone, pérylène, périnone, thioindigo, anthanthrone, anthraquinone, flavanthrone, indanthrone, isoviolanthrone, pyranthrone, dioxazine, quinophtalone, isoindolinone, isoindoline et dicétopyrrolopyrrole.

10. Utilisation selon une ou plusieurs des revendications 1 à 8, **caractérisée en ce que** le composant pigment g) des polyesters colorés est contenu, par rapport au pigment sec, en quantités de 10⁻⁶ à 5 % en poids, de préférence de 10⁻⁵ à 1 % en poids, de manière particulièrement préférée de 10⁻⁴ à 0,5 % en poids, par rapport à 100 % en poids de polyester coloré.

11. Formulation de détergent, contenant au moins 0,01 % en poids, de préférence entre 0,1 et 10 % en poids et de manière particulièrement préférée de 0,2 à 3 % en poids, d'un polyester coloré selon une ou plusieurs des revendications 1 à 10, par rapport au poids total de la formulation de détergent.
